# EUROPÄISCHE PATENTSCHRIFT

(11) **EP 0 922 244 B1**
(45) Veröffentlichungstag und Bekanntmachung des Hinweises auf die Patenterteilung: **27.02.2002**
(21) Anmeldenummer: 97934477.7
(22) Anmeldetag: 17.07.1997
(51) Int. Cl.: G02F 1/295, G02F 1/29

(54) **ELEKTRO-OPTISCH STEUERBARE LINSE**
ELECTROOPTICALLY CONTROLLED LENSE
LENTILLE A COMMANDE ELECTRO-OPTIQUE

(30) Priorität: 29.08.1996 DE 19634950
(43) Veröffentlichungstag der Anmeldung: 16.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: HINKOV, Vladimir, D-79199 Kirchzarten (DE); HINKOV, Iliyana, D-79199 Kirchzarten (DE)
(86) Internationale Anmeldenummer: EP9703824
(87) Internationale Veröffentlichungsnummer: WO9809192

(56) Entgegenhaltungen:
- WO-A-96/07949
- ARIMOTO A ET AL: "VARIABLE SPOT-SIZE WAVEGUIDE FOR LASER PRINTING" APPLIED OPTICS, Bd. 33, Nr. 16, 1.Juni 1994, Seiten 3360-3364, XP000450226 in der Anmeldung erwähnt
- JUN LI ET AL: "Electro-optic wafer beam deflector in LiTaO/sub 3/" NONLINEAR FREQUENCY GENERATION AND CONVERSION, SAN JOSE, CA, USA, 29-31 JAN. 1996, Bd. 2700, ISSN 0277-786X, PROCEEDINGS OF THE SPIE - THE INTERNATIONAL SOCIETY FOR OPTICAL ENGINEERING, 1996, SPIE-INT. SOC. OPT. ENG, USA, Seiten 73-77, XP002045311
- PATENT ABSTRACTS OF JAPAN vol. 012, no. 129 (P-692), 21.April 1988 -& JP 62 251718 A (HITACHI LTD), 2.November 1987,
- YAMADA M ET AL: "ELECTRIC-FIELD INDUCED CYLINDICAL LENS, SWITCHING AND DEFLECTION DEVICES COMPOSED OF THE INVERTED DOMAINS IN LIBNO3 CRYSTALS" APPLIED PHYSICS LETTERS, Bd. 69, Nr. 24, 9.Dezember 1996, Seiten 3659-3661, XP000644110

## Beschreibung

Die Erfindung betrifft eine elektro-optisch steuerbare Linse, bestehend aus einem elektro-optischen Kristallplattchen, insbesondere einem in Z-Richtung geschnittenen Lithiumniobat- oder Lithiumtantalatkristallplättchen, und auf der Kristalloberfläche angeordneten Elektroden zum Anlegen eines elektrischen Feldes.

In Laser-Abtast-Systemen, so beispielsweise in Schreib-/Leseköpfen optischer CDs, ist es z.B. erforderlich, Mittel vorzusehen, die es ermoglichen, den Fokuspunkt des Laserstrahlers zu verschieben. Die hierzu üblicherweise eingesetzten mechanischen Aktuatoren zum Verschieben von optischen Bauteilen lassen jedoch nur eine vergleichsweise langsame Änderung zu. Einen derartigen Nachteil weist eine bekannte elektro-optisch steuerbare Linse nicht auf (A. Arimoto, S. Kakizaki, K. Senda, T. Nishimura and S. Saitoh "Variable spot-size waveguide for laser printing", Applied Optics/Vol. 33, No. 16, 3360 - 3364, 1 June 1995). Die elektro-optisch steuerbare Linse besteht hierbei aus einem Lithiumniobatkristall, entlang dessen Oberfläche sich eir titaneindiffundierter optischer Wellenleiter erstreckt, der mit einer Mehrzahl, z.B. 10, zueinander parallel angeordneter und sich in Lichtausbreitungsrichtung erstreckender streifenförmiger Metall-Elektroden bedeckt ist, wobei die Streifenbreite ca. 20 µm, der Abstand zwischen den Streifen ca. 180 µm beträgt und die Länge der Elektroden so bemessen ist, daß sie mit ihrem einen Ende auf einer Parabel liegen, wobei das Ende der mittleren Elektrode deren Schetelpunkt bildet. Das Anlegen einer elektrischen Spannung, z.B. von ± 60 V, an die Elektroden bewirkt durch den elektro-optischen Effekt eine Änderung der Brechzahl im Wellenleiter, so daß eine optische Welle mit einer ursprunglich geraden Wellenfront beim Durchgang durch den Wellenleiterabschnitt, auf dem die Elektroden angeordnet sind, dahingehend verändert wird, daß deren Wellenfront eine parabolische Krümmung erfährt. Das heißt, der kollimierte Laserstrahl wird konvergent oder divergent. Je nach angelegter Spannung läßt sich mit einer derartigen Struktur die Brennweite zwischen ca. 1000 mm und unendlich ändern. Eine solche elektro-optisch steuerbare Linse hat jedoch folgende Nachtelle:

Die Metallelektroden können nicht schmaler als eine bestimmte Breite, die bei ca. 20 µm liegt, ausgebildet werden. Das unmittelbar unter den Elektroden geführte Licht wird teilweise absorbiert und somit sind Intensitätsverluste unvermeidlich. Das am Ausgang der Struktur durch diese Absorption fehlende Licht führt zu Wellenfrontunterbrechungen bzw. Wellenfrontverzerrungen und verursacht starke Nebenmaxima im fokussierten Laserstrahl. Die Wellenfrontkrümmung ändert sich nicht kontinuierlich sondern stufenartig. Die bei den vorgenannten Abmessungen maximal anlegbare Spannung beträgt ± 60 V, die Spannungsdiffeenz V_{E} zwischen den einzelnen Elektroden ist jedoch wesentlich kleiner und beträgt bei einer Elektrodenzahl N = 10 entsprechend V_{E} = ± 60 V/N = ± 6 V. Entsprechend klein fällt auch die Brechzahländerung und damit die mögliche Änderung der Brennweite aus. D.h. die angelegte Spannung wird nicht effektiv genutzt. Hinzu kommt, daß die auf der Wellenleiteroberfläche angeordneten Elektroden ein inhomogenes elektrisches Feld erzeugen, das tief in den Kristall eindringt und einen sehr schlechten Überlapp mit der im Wellenleiter geführten Mode hat.

Der Erfindung liegt daher die Aufgabe zugrunde, eine elektro-optisch steuerbare Linse anzugeben, die frei von diesen Nachteilen ist, d.h. eine elektro-optisch steuerbare Linse, die eine vergleichsweise große Brennweitenänderung zuläßt, wobei die an den Elektroden angelegte elektrische Spannung effektiver genutzt wird.

Diese Aufgabe wird bei einer elektro-optisch steuerbaren Linse der eingangs genannten Art erfindungsgemäß dadurch gelöst, daß das Kristallplättchen über zumindest einen Bereich verfügt, in dem die Richtung der spontanen Polarisation gegenüber einer Normalrichtung des Kristall-plättchens in den übrigen Bereichen invertiert ist, daß dieser Bereich in den zur Normalrichtung senkrechten Ebenen von zumindest einer gekrümmten Linie begrenzt ist und daß jeweils eine einzige auf der Kristailoberseite und auf der Kristallunterseite angeordnete, rechteckförmig ausgebildete und zumindest den Inversionsbereich vollständig überdeckende Elektrode vorgesehen ist.

Die erfindungsgemäße elektro-optisch steuerbare Linse funktioniert wie folgt: Nimmt man an, daß eine planare optische Welle mit einer geraden Wellenfront in das Kristallplättchen eingekoppelt wird, so wird sich beim Durchgang der optischen Welle durch das Kristailplättchen mit dem domäneninvertierten Bereich an der Form der Wellenfront nichts ändern, solange an den Elektroden keine Spannung angelegt wird. Mit dem Anlegen einer elektrischen Spannung an der Elektroden und der damit einhergehenden Ausbildung eines elektrischen Feldes parallel zur optischen c-Achse, werden jedoch im Kristall unterhalb der Elektroden Brechzahländerungen ± Δ n erzeugt, wobei das Vorzeichen von Δ n von der Ausrichtung der c-Achse abhängt. Das heißt, wenn Δ n im domäneninvertieren Bereich positiv ist, wird es im von den Elektroden überdeckten benachbarten nichtinvertierten Bereich negativ sein oder jeweils umgekehrt.Dies hat zur Folge, daß das Licht beim Durchlaufen des Kristallplättchens im von den Elektroden überdeckten Beraich eine Phasenanderung erfährt und die optische Welle mit der ursprünglich geraden Welienfront in eine optische Welle mit gekrümmter Wellenfront überführt wird. Die Krümmung hängt dabei von der Form des domäneninvertierten Bereiches ab. Das Vorzeichen der Brechzahlanderung Δ n bestimmt, ob die Linse als Sammel- oder Streulinse wirkt. Das Umschalten zwischen diesen zwei Zuständen kann mit der Änderung des Vorzeichens der an die Elektroden angelegten elektrschen Spannung erreicht werden.

Die erfindungsgemaße elektro-optisch steuerbare Linse zeichnet sich insbesondere cadurch aus, daß es keine Unterbrechungen und Verzerrungen in der Wellenfront der die Linse verlassenden optischen Welle gibt und die Ausgangswelle niedrige Seitenbänder hat. Das elektrische Feld ist homogen, überlappt vollständig mit der optischen Welle und wird demzufolge vollständig ausgenutzt. Dies bedeutet, mit einer erfindungsgemäß ausgeb Ideten Linse lassen sich bei vergleichbaren Abmessungen gegenüber der elektro-optisch steuerbaren Linse nach dem Stand der Technik bei der gleichen Steuerspannung viel kurzere und zwar etwa um den Faktor 5 kürzere Fokusabstande erreichen.

Da die beim Anlegen einer elektrischen Spannung an die Elektroden erreichten Brechzahländerungen innerhalb und außerhalb des domäneninvertierten Bereiches entgegengesetzte Vorzeichen haben, verdoppelt sich hierbei auch der Betrag der Phasenanderung, den die optische Welle erfahrt, so daß vergleichsweise der Fokusabstand noch einmal halbiert wird.

Vorzugsweise Ausführungsformen der Erfindung sind Gegenstand der Unteransprüche 2 bis 9.
Die Erfindung soll nachstehend anhand von Ausführungsbeispielen und einer zugehörigen Zeichnung näher erläutert werden. In der Zeichnung zeigen:
- Figur 1: eine elektro-optisch steuerbare Linse nach dem Stand der Technik,
- Figur 2: eine erfindungsgemäße elektro-optisch steuerbare Linse in einer Perspektivischen Darstellung,
- Figur 3: die elektro-optisch steuerbare Linse gemäß Figur 2 in Draufsicht,

- Figur 4: schematisch einen Schreib-/Lesekopf für optische Speichermedien, in dem die erfindungsgemäß ausgebildete elektro-optisch steuerbare Linse Anwendung findet,
- Figur 5: schematisch den Aufbau einer erfindungsgemäßen 2-D elektro-optisch steuerbaren Linse,

- Figur 6: die zusammengesetzte 2-D elektro-optisch steuerbare Linse gemäß Figur 5 mit schematischer Darstellung der Wellenfronten des Eingangs- und des Ausgangs-Lichtstrahles,
- Figur 7: im Detail die Elektrodenanschlüsse für die 2-D elektro-optisch steuerbare Linse urd
- Figur 8: eine Anordnung mit zwei elektro-optisch steuerbaren Linsen.

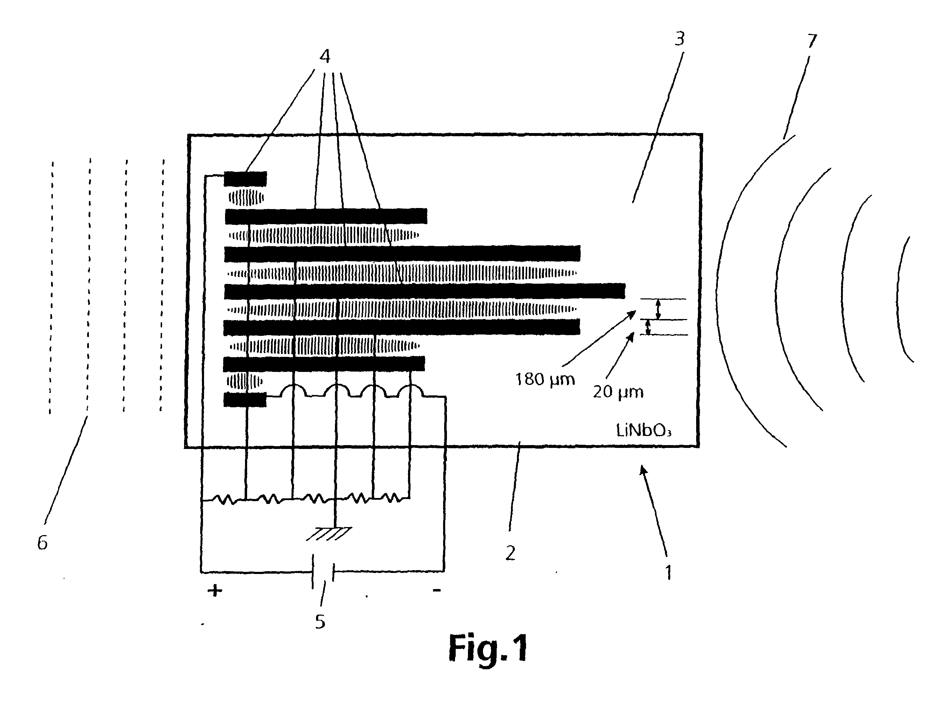

Die in Figur 1 schematisch dargestellte bekannte elektro-optisch steuerbare Linse 1 besteht aus einem planaren Lithiumniobat-Substratkörper 2 mit einem sich entlang dessen Oberfläche von einer Lichteintrittsseite zu einer Lichtaustrittsseite erstreckenden titaneindiffundierten optischen Schichtwellenleiter 3, der mit einer Mehrzahl (hier 7) zueinander parallel angeordneter und sich in Lichtausbreitungsrichtung erstreckender streifenförmiger Metailelektroden 4 bedeckt ist. Die Breite jedes einzelnen Streifens beträgt dabei ca. 20 µm. Der Abstand zwischen den einzelnen Streifen wird mit ca. 180 µm angegeben. Die Länge der streifenförmigen Elektroden 4 ist so bemesser, daß sie mit einem ihrer beiden Enden auf einer Parabel liegen, wobei das eine Ende der mittleren Elektrode 4 deren Scheitelpunkt bildet. Die gesamte Länge der Struktur beträgt 12 mm. Mittels Spannungsquelle 5 sind die Elektroden 4 mit einer elektritschen Spannung beaufschlagbar, wodurch aufgrund des elektro-optischen Effektes eine Änderung der Brechzahl im darunterliegenden optischen Wellenleiter 3 bewirkt werden kann, was zur Folge hat, daß eine optische Welle, die vor Eintritt in den Wellenleiter 3 eine ebene Wellenfront 6 aufweist, beim Verlassen des mit den Elektroden 4 bedeckten Bereiches des Wellenleiters 3 eine parabolisch gekrümmte Wellenfront 7 besitzt, d.h., ein einfallender kollimierter Lichtstrahl wird ausgangsseitig konvergent oder divergent. Eine derartig steuerbare elektro-optische Linse 1 ist jedoch mit den eingangs erwähnten Nachteilen behaftet.

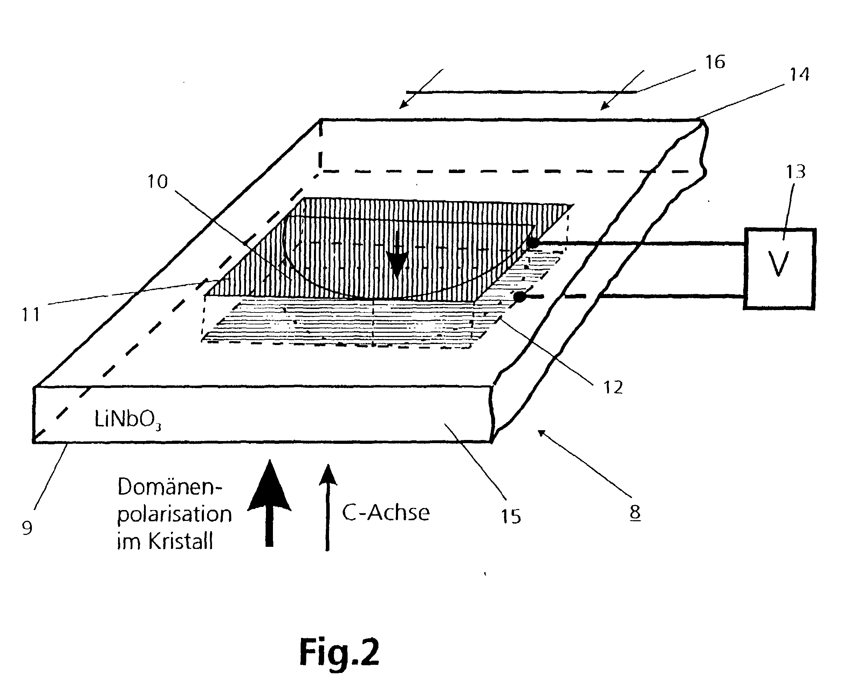

Figur 2 zeigt nun eine erfindungsgemäße elektro-optisch steuerbare Linse 8. Als Substratkörper dient ein Kristallplattchen 9 aus einem elektro-optischen Material, z.B. aus Lithiumniobat oder Lithiumtantalat. Das im gewählten Beispiel aus Lithiumniobat bestehende in Z-Richtung geschnittene Kristallplättchen 9 verfügt über einen Bereich 10, in dem die Richtung der spontanen Polarisation gegenüber einer Normalrichtung (dicker Pfell) in den übrigen Bereichen invertiert ist.

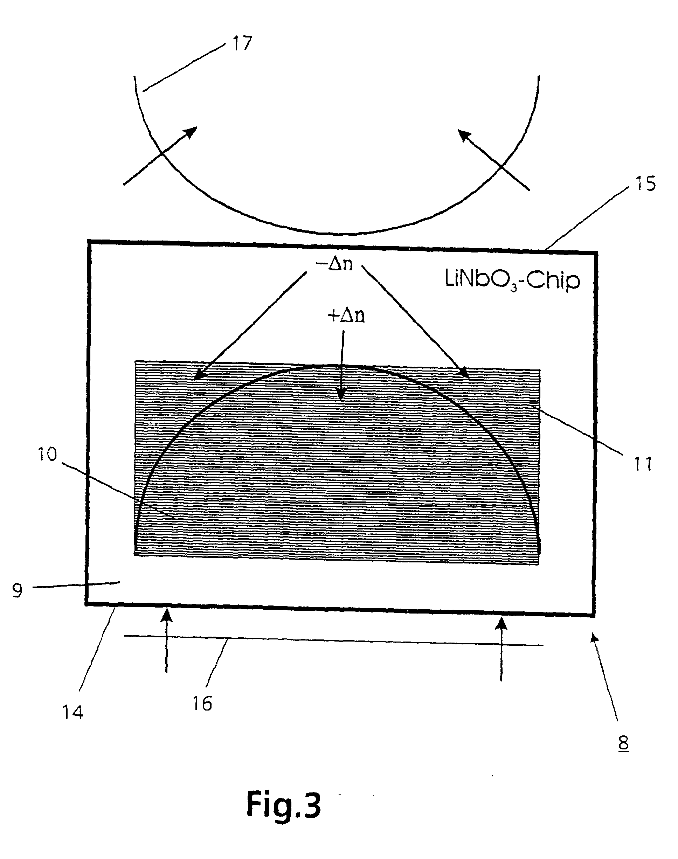

Die Inversion der Richtung der spontanen Polarisation in den Kristalldomanen kann mit einem bekannten Verfahren erreicht werden. Praktisch wird dabei lokal, d h in bestimmten Bereichen, die optische c-Achse im Kristall um 180° gedreht. Dies gelingt z.B. auf einem +Z-Schnitt-Lithiumniobatkristall (eine Inversion ist auch auf einem -Z-Schnitt-Lithiumniobatkristall möglich) durch das Auftragen einer Titan-Schicht und anschließendes Aufheizen auf über 1000° C. Die Tiefe des invertierten Bereiches kann dabei bis zu 1 mm betragen. Die geometrische Gestalt des invertierten Bereiches kann mit Hilfe eines photolithographischen Strukturierungsprozesses sehr präzise ausgeführt werden. So ist es beispielsweise ohne weiteres möglich, den Bereich 10 so auszubilden, daß dieser, wie in den Figuren 2 und 3 dargestellt, in den zur Normalrichtung senkrechten Ebenen auf der einen Seite von einer zur Kristallkante des rechteckigen Kristallplättchens 9 parallelen Geraden und im übrigen von einer gekrümmten Linie, z.B. von einer Parabel, begrenzt wird. Komplettiert wird die Linse 8 durch zwei rechteckige Metallelektroden 11 und 12, wobei die Elektrode 11 auf der Oberseite und die Elektrode 12 auf der Unterseite des Kristallplättchens 9 angeordnet ist. Die Größe der Elektroden 11 und 12 ist dabei so gewählt, daß diese den domäneninvertierten Bereich 10 jeweils vollständig überdecken. Die Elektroden 11 und 12 sind mit einer steuerbaren Spannungsquelle 13 verbunden. Das Licht kann entweder in der Nähe der Kristalloberfläche in einem z.B. durch Titaneindiffusion hergestellten optischen Wellenleiter oder aber, wie in den Figuren 2 und 3 dargestellt, im gesamten Kristallplättchen 9 geführt werden, wobei in der Zeichnung das Bezugszeichen 14 die zur geraden Begrenzungslinie des domäneninvertierten Bereiches 10 unmittelbar benachbarte Lichteintrittsselte und das Bezugszeichen 15 die zur gekrümmten Begrenzungslinie des Bereiches 10 benachbarte Lichtaustrittsseite am Kristallplättchen 9 bezeichnen. Wird das Licht in einem optischen Wellenleiter geführt, so ist es vorteilhaft, wenn zwischen der oberen Elektrode und dem Wellenleiter eine dielektrische Trennschicht vorgesehen ist, um eine Absorption zu vermeiden.
Die elektro-optisch steuerbare Linse 8 funktioniert wie folgt:

Nimmt man an, daß eine planare optische Welle mit einer geraden Wellenfront 16 auf der Lichte ntrittsseite 14 des Kristallplattchens 9 eingekoppelt wird, so wird sich beim Durchgang der optischen Welle durch das Kristallplättchen 9 mit dem domäneninvertierten Bereich 10 an der Form der Wellenfront nichts ändern, solange an den Elektroden 11 und 12 keine elektrische Spannung angelegt wird. Mit dem Anlegen einer elektrischen Spannung an den Elektroden 11 und 12 und der damit einhergehenden Ausbildung eines elektrischen Feldes parallel zur optischen c-Achse werden jedoch im Kristall unterhalb der Elektroden 11 bzw. 12 Brechzahländerungen ± Δ n erzeugt (Figur 3). Das Vorzeichen von Δ n hängt dabei von der Ausrichtung der c-Achse ab, das heißt, wenn Δ n im domäneninvertierten Bereich 10 positiv ist, wird es im von den Elektroden 11, 12 überdeckten benachbarten nichtinvertierten Bereich negativ sein oder jeweils umgekehrt. Auf diese Weise erfährt das Licht beim Durchlaufen des Kristallplattchens 9 im von den Elektroden 11, 12 überdeckten Bereich eine Phasenänderung und die optische Welle mit der ursprünglich geraden Wellenfront 16 wird in eine optische Welle mit gekrümmter Wellenfront 17 überführt. Die Krümmung hängt dabei von der Form des domäneninvertierten Bereiches 10 ab. Das Vorzeichen der Brechzahländerung Δ n bestimmt, ob die Linse 8 als Sammel- oder Streulinse wirkt. Das Umschalten zwischen diesen zwei Zuständen kann einfach mit der Änderurg des Vorzeichens der angelegten elektrischen Spannung erreicht werden.

Die anhand der Figuren 2 und 3 beschriebene Linse 8 weist einen auf der Lichtaustrittsseite parabolisch begrenzten domäneninvertierten Bereich 10 auf.

Selbstverstandlich ist es auch möglich, domäneninvertierte Bereiche anderer geometrischer Gestalt herzustellen, um so z.B. Bragg- oder Fresnel-Linsen zu realisieren. Ebenso können mit der Auswahl der geometrischen Gestalt von vornherein bestimmte Abbildungsfehler der Linse korrigiert werden. Weiterhin besteht die Möglichkeit, mehrere derartige elektro-optisch steuerbare Linsen oder eine Kombination mit konventionellen Linsen auf ein und denselben Substratkörper bzw. Kristallplättchen anzuordnen.

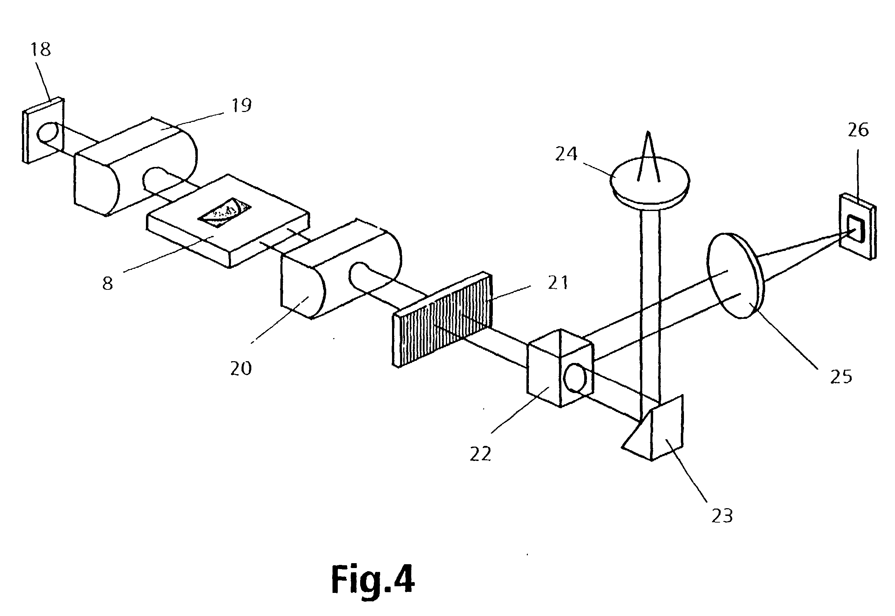

Figur 4 zeigt ein mögliches Einsatzgebiet für die elektro-optisch steuerbare Linse 8 und zwar in einem Lese-/Schreibkopf für optische Spelchermedien Dieser Lese-/Schreibkopf besteht hier aus einer Laserstrahlenquelle 18 und des weiteren, jewells nacheinander im Strahlengang angeordnet, einer ersten Zylinderlinse 19, der elektro-optisch steuerbaren Linse 8, einer zweiten Zylnderlinse 20, einem Hologramm 21 und einem Strahlteiler 22 sowie dem Strahlteiler 22 nachgeordnet einem Strahlumlenker 23 und einer Objektivlinse 24 einerseits sowie einer Detektorlinse 25 und einem Detektor 26 andererseits. Während üblicherweise die Fokusnachführung der Objektiviinse 24 durch eine Verschiebung des gesamten Lese-/Schreibkopfes erreicht wird, kann dies hier trägheitslos mit Hilfe der elektro-optisch steuerbaren Linse 8 bewirkt werden.

Mit der vorstehend beschriebenen Linse 8 läßt sich der Lichtstrahl lediglich in einer Dimension fokussieren oder defokussieren.

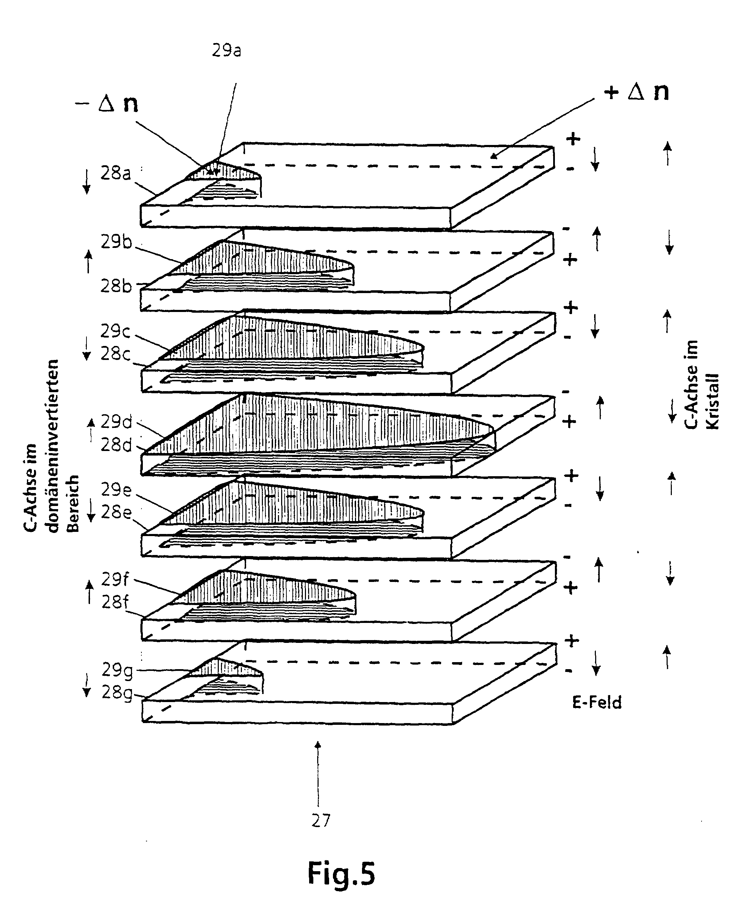

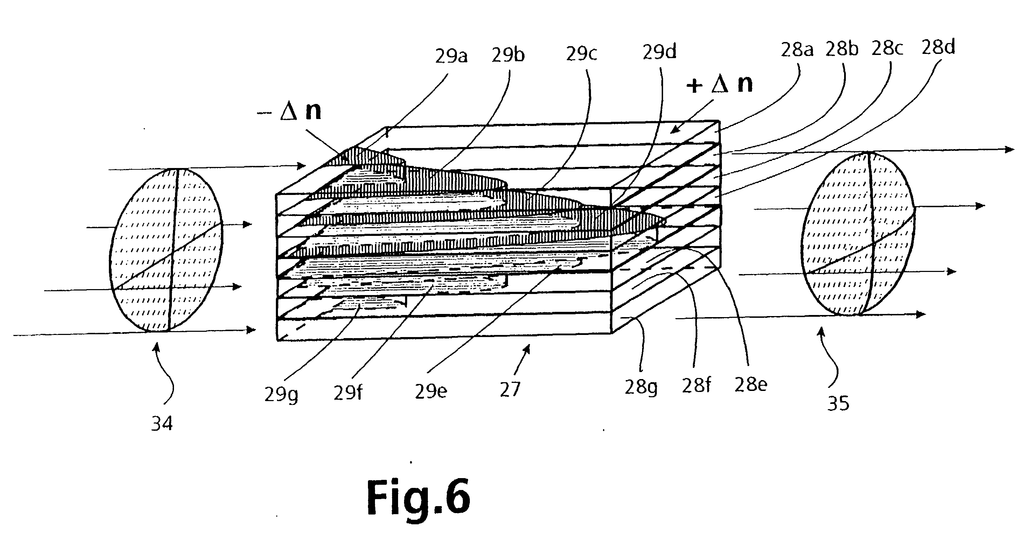

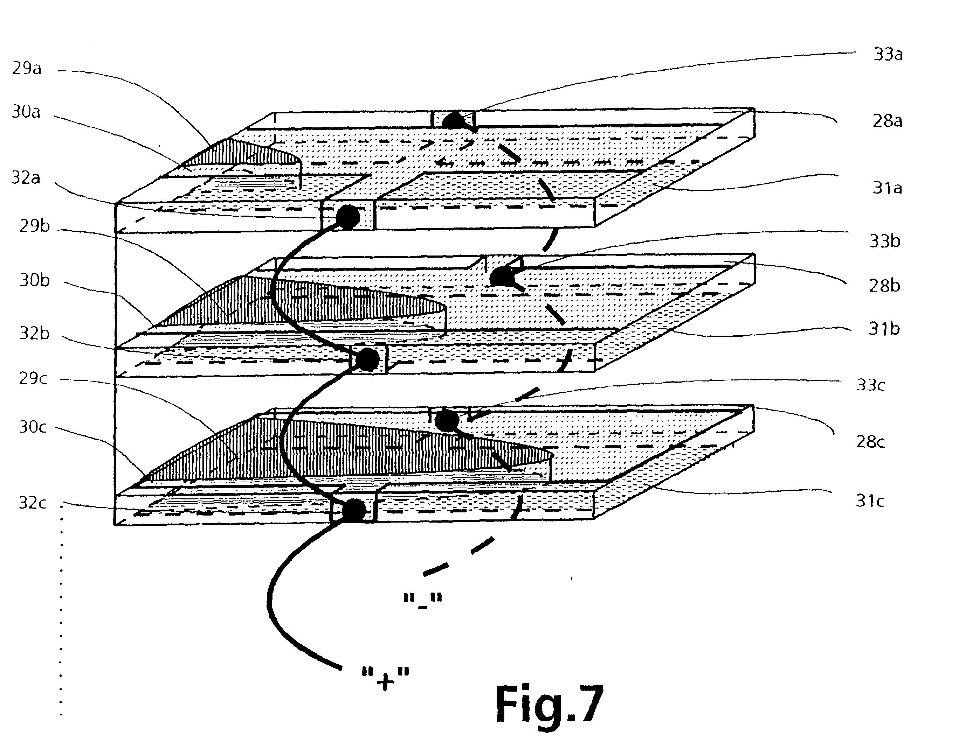

Die Figuren 5 - 7 zeigen schematisch den Aufbau einer elektro-optisch steuerbaren Linse 27, mit der sich der diese Linse 27 durchsetzende Lichtstrahl in zwei Dimensionen beeinflussen läßt. Die 2-D elektrooptisch steuerbare Linse 27 setzt sich aus einem Satz von mehreren, im gewählten Beispiel sieben übereinandergestapelten Kristallplättchen 28a bis 28g zusammen. In Figur 5 sind die Kristallplättchen 28a bis 28g aus Gründen der übersichtlichen Darstellung beabstandet voneinander gezeichnet. Jedes einzelne dieser Kristallplättchen 28a bis 28g weist dabei vom Prinzip her ebenso wie das Kristallplättchen 9 der Linse 8 einen domäneninvertierten Bereich auf, nur daß die hier mit 29a bis 29g bezeichneten domäneninvertierten Bereiche von Kristallplättchen zu Kristallplättchen unterschiedlich ausgedehnt sind und zwar so, daß diese Bereiche 29a bis 29g im Kristallplättchenstapel 28a bis 28g zumindest näherungsweise einen Rotationskörper, beispielsweise ein Paraboloid, bilden. Die einzelnen Kriställplättchen 28a bis 28g sind jeweils auf ihrer Oberseite und auf ihrer Unterseite mit einer rechteckförmigen Elektrode aus Metall oder einem optisch transparenten und elektrisch leitfähigen Material wie ITO versehen. Figur 7 zeigt dies im einzelner bei den Kristallplättchen 28a, 28b und 28c, die jeweils über eine obere Elektrode 30a bzw. 30b bzw. 30c und über eine untere Elektrode 31a bzw. 31b bzw 31c verfugen. Die Breite der Elektroden 30 bzw. 31 ist dabei so gewahlt, daß diese in der Breite zumindest den jeweiligen domäneninvertierten Bereich im betreffenden Kristallplättchen vollständig überdecken. Die Länge der Elektroden 30 bzw. 31 richtet sich nach dem Kristallplättchen mit dem langenmaßig ausgedehntesten domäneninvertierten Bereich und ist gleich oder größer als die maximale Länge dieses Bereiches. Im gewählten Beispiel wird sich die Elektrodenlänge also nach dem in der Mitte des Kristallplättchenstapels angeordneten Kristallplättchen 28d mit dem domäneninvertierten Bereich 29d richten. Die einzelnen Kristallplättchen 28a bis 28g sind so zueinander orientiert, daß in jewells zwei unmittelbar benachbarten Kristallplättchen die optischen c-Achsen gegeneinander gerichtet sind. Diese Orientierung erlaubt, jeweils die im Kristallplättchenstapel aufeinanderliegenden Elektroden zweier benachbarter Kristallplättchen mit der gleichen elektrischen Polarität zu kontaktieren und gleichzeitig in den beiden Plättchen die gleichen Brechzahländerungen zu erzeugen. Beim in der Zeichnung dargestellten Fall wird in allen domäneninvertierten Bereichen 29a bis 29g eine "-Δn" Änderung und in den üngen von den Elektroden 30 und 31 überdeckten Bereichen eine "+ Δ n" Änderung erzeugt. Dies führt hier dazu, daß ein Eingangslichtstrahl 34 beim Durchlaufen der Linse 27 in einen defokussierten Ausgangslichtstrahl 35 überführt wird (Figur 6). Neben der Anordnung der Elektroden auf den in Figur 7 aus Übersichtlichkeitsgründen beabstandet voneinander gezeichneten Kristallplättchen 28a, 28b und 28c, zeigt Figur 7 im Detail die Lage der einzelnen Elektrodenanschlüsse. So weist die obere Elektrode 30a des Kristallplättchens 28a einen an die vordere Schmalseite des Kristallplättchens 28a herausgeführten Elektrodenanschluß 32a und die untere Elektrode 31a desselben Kristallplättchens einen an die hintere Schmalseite geführten Elektrodenanschluß 33a auf. Beim darunterliegenden Kristallplättchen 28b hingegen ist die untere Elektrode 31b mit einem an die vordere Schmalseite ces Kristallplättchens 28b herausgeführten Elektrodenanschluß 32b und die obere Elektrode 30b mit einem zur hinteren Schmalseite dieses Kristallplättchens geführten Elektrcdenanschluß 33b versehen. Beim unter dem Kristallplättchen 28b plazierten Kristallplättcher 28c weist die obere Elektrode 30c wiederum einen an die vordere Schmalseite dieses Kristallplättchens geführten Elektrodenanschluß 32c auf, wahrend die untere Elektrode 31c mit einem Elektrodenanschluß 33c versehen ist, der an die hintere Schmalseite des Kristallplättchens 28c führt. Eine derartige Anordnung der Elektrodenanschlusse bietet den Vorteil, daß die Elektrodenanschlüsse der Elektroden mit gleicher Polarität auf ein und derselben Seite des Kristallplättchenstapels 28a bis 28g liegen. So sind z.B. die auf der vorderen Seite des Kristallplättchenstapels 28a bis 28g angeordneten Elektrodenanschlüsse 32 mit dem +Pol und die auf der hinteren Seite plazierten Elektrodenanschlüsse 33 mit dem -Pol der Spannungsquelle verbunden.

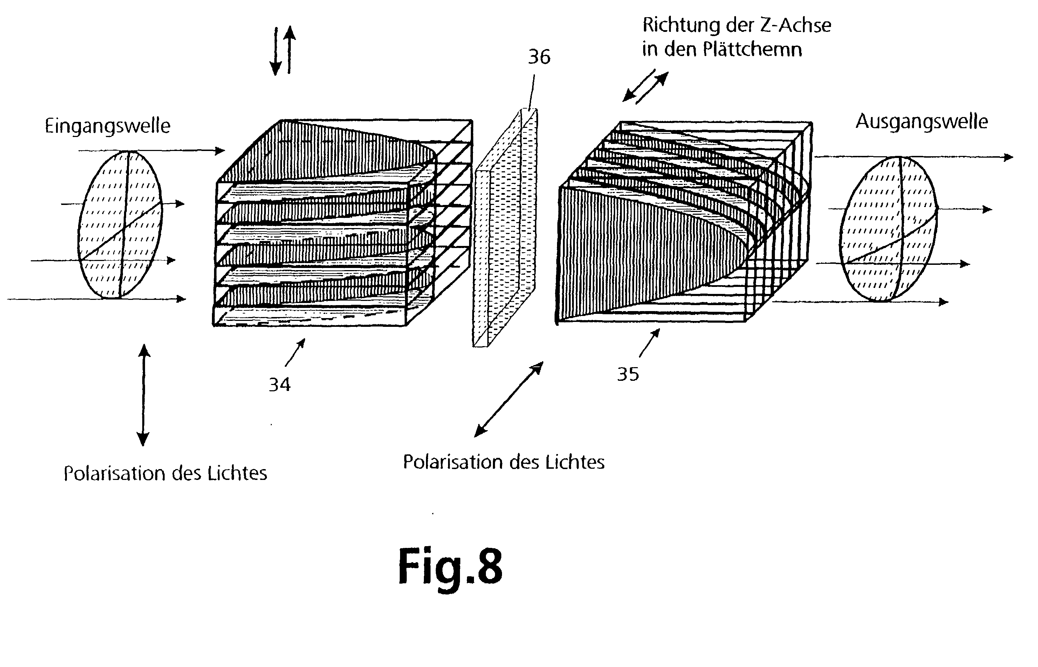

Figur 8 zeigt eine Anordnung mit zwei im Strahlengang hintere nander angeordneten elektro-optisch steuerbaren Linsen 34 und 35, wobei zwischen diesen beiden Linsen 34 und 35 eine λ/2-Platte angeordnet ist. Jece der Linsen 34 und 35 ist aus einem Stapel Kristallplättchen zusammengesetzt. Im Unterschied zur elektro-optisch steuerbaren Linse 27 gemäß den Figuren 5 bis 7 haben hierbei die domäneninvertierten Bereiche jedoch in jedem der einzelnen übereinandergestapelten Kristallplättchen die gleiche Form und Größe. Die zwei aus jeweils einem Kristallplättchenstapel zusammengesetzten Linsen 34 und 35 sind so zueinander orientiert, daß deren Z-Achsen zueinander senkrecht stehen und parallel zur Polarisationsrichtung des jeweils einfallenden Lichtes verlaufen. Die Orientierung der Achsen der λ/2-Platte 36 ist so ausgewählt, daß diese die Polarisationsrichtung des Lichtes nach der ersten Linse 34 um 90° dreht und parallel zur Z-Achse der zweiten Linse 35 einstellt.

Mit den zwe Linsen 34 und 35 läßt sich die Wellenfront des Lichtes in zwei Dimensionen beeinflussen, d.h. fokussieren oder defokussieren. Der Vorteil dieser Ausführung liegt darin, daß die Wellenfrontänderungen in den zwei senkrecht zueinander stehenden Richtungen für jede Richtung unabhängig vorgenommen werden kann. Das Beispiel in Figur 8 demonstriert eine Defokuss erung des Lichtes, die in be den Richtungen gleich groß ist. Es besteht aber auch die Möglichkeit, die zwei Linsen unterschiedlich zu steuern und im Extremfall in die eine Richtung zu fokussieren und in die andere zu defokussieren.

## Patentansprüche

1. Elektro-optisch steuerbare Linse, bestehend aus einem elektro-optischen Kristallplättchen, insbesondere einem in Z-Richtung geschnittenen Lithiumniobat- oder Lithiumtantalatkristallplättchen, und auf der Kristalloberfläche angeordneten Elektroden zum Anlegen eines elektrischen Feldes,
**dadurch gekennzeichnet,**
**daß** das Kristallplättchen (9) über zumindest einen Bereich (10) verfügt, in dem die Richtung der spontanen Polarisation gegenüber einer Normalrichtung des Kristall-plättchens in den übrigen Bereichen invertiert ist, daß dieser Bereich (10) in den zur Normalrichtung senkrechten Ebenen von zumindest einer gekrümmten Linie begrenzt ist und daß jeweils eine einzige auf der Kristalloberseite und auf der Kristallunterseite angeordnete, rechteckförmig ausgebildete und zumindest den Inversionsbereich (10) vollständig überdeckende Elektrode (11 ; 12) vorgesehen ist.

2. Elektro-optisch steuerbare Linse nach Anspruch 1,
wobei
die gekrümmte Linie Stuck einer Parabel ist.

3. Elektro-optisch steuerbare Linse nach Anspruch 1 oder 2,
wobei
in die Kristallplättchenoberfläche ein optischer Wellenleiter eingebracht ist und zwischen Elektrode und optischem Wellenleiter eine dielektrische Trennschicht vorgesehen ist.

4. Elektro-optisch steuerbare Linse nach einem der Ansprüche 1 bis 2,
wobei
die Linse (27) aus mehreren übereinandergestapelten, jeweils mit einem Inversionsbereich (29a - 29g) und mit Elektroden (30a - 30g ; 31a - 31g) versehenen Kristallplättchen (28a - 28g) zusammengesetzt ist.

5. Elektro-optisch steuerbare Linse nach Anspruch 4,
wobei
die Inversionsbereiche (29a - 29g) der einzelnen Kristallplättchen (28a - 28g) derart begrenzt sind, daß die Inversionsbereiche (29a - 29g) im Kristallplättchenstapel (28a - 28g) einen Rotationskörper bilden.

6. Elektro-optisch steuerbare Linse nach Anspruch 5,
wobei
der Rotationskörper ein Parabolold ist.

7. Elektro-optisch steuerbare Linse nach einem der Ansprüche 1 bis 6,
wobei
die Elektroden (30a - 30g, 31a - 31g) aus einem optisch transparenten und elektrisch leitfähigen Material bestehen.

8. Elektrc-optisch steuerbare Linse nach einem der Ansprüche 4 bis 7,
wobei
die auf der einen Seite eines jeden Kristallplättchens (28a - 28g) angeordnete Elektrode (30a - 30g) mit einem an eine Schmalseite des Kristallplättchens (28a - 38g) herausgeführten Elektrodenanschluß (32a - 32g) und die auf der anderen Seite des jeweiligen Kristallplättchens (28a - 28g) angeordnete Elektrode (31a - 31g) mit einem an die gegenüberliegende Schmalseite des Kristallplättchens (28a - 28g) herausgeführten Elektrodenanschluß (33a - 33g) versehen ist.

9. Lese-/Schreibkopf für optische Speichermedien mit einer elektro-optisch steuerbaren Linse nach einem der Ansprüche 1 bis 8.

## Claims

1. Electrooptically controllable lens comprising an electrooptical crystal wafer, particularly a lithium niobate or lithium tantalate crystal wafer, which is cut in the Z-direction, and electrodes which are disposed on the crystal surface for applying an electric field,
**characterised in that**
the crystal wafer (9) has at least one region (10) in which the direction of the spontaneous polarisation is inverted relative to a standard direction of the crystal wafer in the remaining regions, **in that** this region (10) is delimited by at least one curved line in the planes which are perpendicular to the standard direction and **in that** a single electrode (11; 12) respectively is provided which is disposed on the crystal upper side and on the crystal lower side, has a rectangular configuration and completely covers at least the inversion region (10).

2. Electrooptically controllable lens according to claim 1,
the curved line being a portion of a parabola.

3. Electrooptically controllable lens according to claim 1 or 2,
an optical waveguide being placed in the crystal wafer surface and a dielectric separation layer being provided between the electrode and the optical waveguide.

4. Electrooptically controllable lens according to one of the claims 1 to 2,
the lens (27) being assembled from a plurality of crystal wafers (28a - 28g) which are stacked one above the other and provided respectively with an inversion region (29a - 29g) and with electrodes (30a - 30g; 31a - 31g).

5. Electrooptically controllable lens according to claim 4,
the inversion regions (29a - 29g) of the individual crystal wafers (28a - 28g) being delimited in such a manner that the inversion regions (29a - 29g) form a solid of rotation in the crystal wafer stack (28a - 28g).

6. Electrooptically controllable lens according to claim 5,
the solid of rotation being paraboloid.

7. Electrooptically controllable lens according to one of the claims 1 to 6,
the electrodes (30a - 30g, 31a - 31g) being made of an optically transparent and electrically conductive material.

8. Electrooptically controllable lens according to one of the claims 4 to 7,
the electrode (30a - 30g), which is disposed on the one side of each crystal wafer (28a - 28g), being provided with an electrode connection (32a - 32g) which is led out onto one narrow side of the crystal wafer (28a - 38g), and the electrode (31a- 31g), which is disposed on the other side of the respective crystal wafer (28a - 28g), being provided with an electrode connection (33a - 33g) which is led out onto the oppositely-situated narrow side of the crystal wafer (28a - 28g).

9. Read-write head for optical storage media with an electrooptically controllable lens according to one of the claims 1 to 8.

## Revendications

1. Lentille à commande électro-optique formée d'une plaquette de cristal électro-optique, notamment une plaquette d'un cristal de niobate de lithium ou de tantalate de lithium, coupée dans la direction Z, ainsi que des électrodes appliquées à la surface du cristal pour créer un champ électrique,
**caractérisée en ce que**
la plaquette de cristal (9) dispose d'au moins une zone (10) dans laquelle la direction de la polarisation spontanée est inversée par rapport à la direction normale de la plaquette de cristal dans les autres zones, cette zone (10) est délimitée dans les plans perpendiculaires à la direction normale par au moins une ligne courbe, et chaque fois une unique électrode (11, 12) de forme rectangulaire est prévue sur la face supérieure et sur la face inférieure du cristal, et qui recouvre complètement au moins la zone d'inversion (10).

2. Lentille à commande électro-optique selon la revendication 1,
dans laquelle
la ligne courbe est une partie de parabole.

3. Lentille à commande électro-optique selon la revendication 1 ou la revendication 2,
dans laquelle
la surface de la plaquette de cristal comporte un guide d'onde optique et une couche de séparation diélectrique est prévue entre l'électrode et le guide d'onde optique.

4. Lentille à commande électro-optique selon les revendications 1 et 2,
dans laquelle
la lentille (27) est formée de plusieurs plaquettes de cristal (28a-28g) superposées, munies chacune de zones d'inversion (29a-29g) et d'électrodes (30a-30g ; 31a-31g).

5. Lentille à commande électro-optique selon la revendication 4,
dans laquelle
les zones d'inversion (29a-29g) des différentes plaquettes de cristal (28a-28g) sont délimitées pour que les zones d'inversion (29a-29g) forment un corps de rotation dans la pile de plaquettes de cristal (28a-28g).

6. Lentille à commande électro-optique selon la revendication 5,
dans laquelle
le corps de rotation est un paraboloïde.

7. Lentille à commande électro-optique selon les revendications 1 à 6,
dans laquelle
les électrodes (30a-30g ; 31a-31g) sont réalisées en une matière optique transparente et conductrice électrique.

8. Lentille à commande électro-optique selon les revendications 4 à 7,
dans laquelle
l'électrode (30a-30g) prévue sur un côté de chaque plaquette de cristal (28a-28g) est munie d'un branchement d'électrodes (32a-32g) sortant par un petit côté de la plaquette de cristal (28a-28g) et l'électrode (31a-31g) prévue sur l'autre côté de chaque plaquette de cristal (28a-28g) est munie d'un branchement d'électrode (33a-33g) sortant du petit côté opposé de la plaquette de cristal (28a-28g).

9. Tête de lecture/écriture pour un support d'enregistrement optique comportant une lentille à commande électro-optique selon l'une des revendications 1 à 8.
